# EUROPÄISCHE PATENTSCHRIFT

(11) **EP 0 450 018 B1**
(45) Veröffentlichungstag und Bekanntmachung des Hinweises auf die Patenterteilung: **08.03.1995**
(21) Anmeldenummer: 90915309.0
(22) Anmeldetag: 24.10.1990
(51) Int. Cl.: F16K 11/074, B60H 1/00

(54) **SCHIEBERVENTIL**
GATE VALVE
SOUPAPE A TIROIR

(30) Priorität: 24.10.1989 DE 3935389
(43) Veröffentlichungstag der Anmeldung: 09.10.1991
(73) Patentinhaber: WOCO Franz-Josef Wolf & Co., D-63628 Bad Soden-Salmünster (DE)
(72) Erfinder: WOLF, Franz-Josef, D-6483 Bad Soden-Salmünster (DE); WEBER, Rudolf, D-6483 Bad Soden-Salmünster (DE)
(74) Vertreter: Jaeger, Klaus, Dr.
(86) Internationale Anmeldenummer: EP9001802
(87) Internationale Veröffentlichungsnummer: WO9106795

(56) Entgegenhaltungen:
- EP-A- 0 071 779
- EP-A- 0 326 839
- DE-A- 2 804 722
- DE-A- 3 829 693
- DE-U- 7 321 690
- FR-A- 2 479 397
- GB-A- 2 071 819

## Beschreibung

Die Erfindung betrifft ein Schieberventil, speziell ein Drehschieberventil mit einem oder mehreren Eingangsanschlüssen und/oder mehreren Ausgangsanschlüssen, zumeist mit weniger Ausgangsanschlüssen als Eingangsanschlüssen, der im Oberbegriff des Patentanspruchs 1 genannten Art.

Die Erfindung betrifft weiterhin die Verwendung solcher Ventile.

Ventile dieser Art, meist Drehschieberventile, vor allem auch Drehschieber-Mischventile, werden in der Technik vielfältig eingesetzt. In der Kraftfahrzeugtechnik finden sie in unterschiedlichen Varianten, meist als Mischventile mit einem scheibenförmigen oder plattenförmigen Drehschieber, im Heizwasserkreislauf der Kraftfahrzeugheizung als Stellventile Verwendung. In anderen Bereichen der Technik werden solche Schieberventile, meist mit einem Eingang und einem Ausgang, als einfache und preiswerte Sperrventile eingesetzt.

Die bekannten Ventile dieser Art sind durch ein vergleichsweise großes Bauvolumen gekennzeichnet. Gleichgültig, ob das gesamte Mischventil mit einem einzigen Verschlußteil oder mit je einem Verschlußteil für jeden Eingangsanschluß arbeitet, benötigt jeder dieser Eingangsanschlüsse ausgangsseitig eine eigene separate Ventilkammeranordnung, um den Ventilsitz mit den zugehörigen Andruckfedern und Andruckplatten aufzunehmen. Dabei ist der Ventilsitz typischerweise ein auf der Ausgangsseite des mit Durchlaßöffnungen versehenen Verschlußteils angeordnetes Gummielement, das auf seiner mit dem Verschlußteil zusammenwirkenden Oberfläche eine PTFE-Beschichtung trägt und durch eine Feder und/oder Andruckplatte auf die Oberfläche des Verschlußteils gepreßt wird.

Durch diese Bauweise werden die Mischventile groß, teuer und schwerfällig.

Ein gattungsgemäßes Mischventil ist aus der FR-A-2 479 397 bekannt. Dieses Mischventil dient als Anordnung zum Einbau im Fahrzeugbau, um den Innenraum des Kraftfahrzeuges mittels der vom Motor abgegebenen Wärme zu erwärmen, das heißt dieses bekannte Mischventil dient als ein einem Wärmetauscher vorgeschaltetes Mischventil. Dieses bekannte Mischventil weist dabei ein aus zwei Teilen gebildetes Gehäuse auf, wobei jedes Gehäuseteil jeweils einen eingangsseitigen Eingangsanschluß und einen ausgangsseitigen Ausgangsanschluß aufweist. Durch die beiden Gehäuseteile wird ein zylindrischer Innenraum gebildet, welcher der Aufnahme eines mit Bohrungen versehenen Regelzylinders dient derart, daß durch eine Verdrehung des Regelzylinders im Gehäuseinnenraum eine Verbindung zwischen den jeweiligen Eingangs- und Ausgangsanschlüssen vollständig oder auch teilweise hergestellt werden kann.

Zwischen den Eingangs- bzw. Ausgangsanschlüssen und dem Regelzylinder sind in den einzelnen Anschlüssen angeordnete Dichtungselemente in Form von Lippendichtringen angeordnet, die an den jeweiligen Stirnflächen des Regelzylinders anliegen und somit einen Fluidaustritt aus den Anschlußleitungen in den Innenraum des Gehäuses verhindern sollen. Die Anordnung der Dichtungslippen ist dabei so getroffen, das jeweils sich nach radial auswärts erstreckende Lippen der Dichtungslippen an den Stirnflächen des Regelzylinders anliegen.

Diese Anordnung weist dabei den Nachteil auf, daß bei unterbrochener Fluidverbindung zwischen den Eingangs- und Ausgangsanschlüssen jeweils am Eingangsanschluß ein Fluidstaudruck herrscht, der die nach außen gerichteten Dichtlippen an den Regelzylinderstirnflächen aufzudrücken versucht derart, daß die Anordnung insgesamt undicht wird.

Probleme bereiten die sonst nahezu universell einsetzbaren Schieberventile auch dann, wenn das zu regelnde oder zu sperrende Fluid feinteilige Feststoffe, beispielsweise Sandanteile oder Staubanteile, mitführt. Diese werden, insbesondere unter der Einwirkung des Staudrucks vor dem Verschlußteil, unter die Dichtbereiche der Gummidichtung transportiert, die auf der Verschlußteiloberfläche dichtend gleiten. Bei längerer Benutzung eines Schiebers entstehen so Verschleifungen, die rasch zur Undichtheit des Schieberventils Anlaß geben.

Ausgehend hiervon liegt der vorliegenden Erfindung zur Vermeidung der geschilderten Nachteile die Aufgabe zugrunde, das Mischventil derart weiterzubilden, daß ein insgesamt kleineres und leichteres Mischventil geschaffen wird, das eine gleiche und sogar verbesserte Funktion und gleiche Leistung aufweist und dabei kostengünstiger gebaut werden kann und eine verbesserte Standzeit bei einer Verwendung in Fluiden gewährleistet, die feinkörnige Feststoffe mitführen.

Die Erfindung weist zur Lösung dieser Aufgabe die im Anspruch 1 angegebenen Merkmale auf. Vorteilhafte Ausgestaltung hiervon sind in den weiteren Ansprüchen beschrieben.

Das Ventil gemäß der Erfindung hat also einen eingangsseitig vor dem Schieber angeordneten Ventilsitz. Dieser Ventilsitz ist als Lippendichtring ausgebildet, und zwar dergestalt mit radial einwärts weisender Dichtlippe, daß das einströmende oder anströmende Medium die Dichtkraft der Dichtlippe erhöht. Bei fehlendem Anpreßdruck durch das das Ventil anströmende Medium weist der elastischere, vorzugsweise aus einem Gummielastomer bestehende Dichtring, der als Ventilsitz dient, eine unter Einbauverformung ausreichende Rückstellkraft auf, um eine "Stand-by-Dichtheit" des Sperrorgans herzustellen. Der fachgerecht dimensionierte und montierte Ventilsitz weist also auch bei fehlendem Innendruck in der Fluidleitung in Richtung auf den als Verschlußteil dienenden Schieber des Ventils eine noch so große Vorspannung, genauer gesagt Verformungsvorspannung, auf, daß die Dichtheit des Ventils gewährleistet bleibt.

Durch diese Anordnung brauchen auf der dem Ausgangsanschluß zugewandten Seite des Verschlußteils keine Federn, Andruckplatten, Dichtelemente, oder andere Ventilteile mehr vorgesehen zu sein, so daß für den oder sämtliche Eingangsanschlüsse lediglich ein flacher Sammelraum im Ventilgehäuse ausgebildet zu sein braucht.

Bei dieser Anordnung können sowohl zylindrische als auch plattenförmige oder scheibenförmige Verschlußteile verwendet werden, von denen, bei mehreren Eingangsanschlüssen, sowohl jeweils ein einziges Verschlußteil gemeinsam für alle Eingangsanschlüsse vorgesehen sein kann oder, alternativ, jedem Eingangsanschluß, wie bei einem 1/1-Ventil, ein eigenes Verschlußteil zugeordnet sein kann. Während die erste Bauweise wesentlich einfachere und kostengünstigere Konstruktionen ermöglicht, ermöglicht die zuletzt genannte aufwendigere Bauweise des Mischventils eine individuell unabhängige Regelung und Einstellung für jeden einzelnen Eingangsanschluß. Der Konstrukteur wird hier zwischen Kosten und Leistung zu entscheiden und seine Kompromisse zu finden haben, hat dabei aber bei beiden Konstruktionsweisen gegenüber den für beide Konstruktionsweisen bekannten Lösungen den durch die Erfindung ermöglichten Vorteil der ausgangsseitig flacheren und kleineren und auch wesentlich einfacher zu montierenden Anordnung und Ausbildung des Ventils, ohne dabei eine nennenswerte eingangsseitige Vergrößerung der Ventilbauseite in Kauf nehmen zu müssen. Dies wird vor allem dadurch ermöglicht, daß für den elastischen Ventilsitz keinerlei Andruckfedern oder Andruckplatten benötigt werden, da die als Ventilsitze ausgebildeten Lippendichtringe durch das einströmende Medium selbst mit der erforderlichen Anpreß-Dichtkraft beaufschlagt werden können.

Der als Ventilsitz dienende Dichtring, speziell Lippendichtring, ist vorzugsweise so ausgebildet, daß er sich im vormontierten unverspannten Zustand von der Eingangsanschlußseite her zum Verschlußteil hin zumindest im wesentlichen konisch oder glockenförmig oder mit glockenartig gewelltem Profil trichterartig verjüngt und im betriebsfertigen Einbauzustand axial zwischen dem eingangsseitigen Ventilgehäuseteil und dem Verschlußteil unter Druckverformung eingespannt ist, wobei am weiteren, also einlaßseitigen Rand des konischen Lippendichtringabschnitts, ein stärker ausgebildeter zylindrischer Ringabschnitt anschließt, der zumindest im wesentlichen koaxial zumindest zum Mündungsbereich des Eingangsanschlusses ausgerichtet eingebaut wird. So kann dieser zylindrische Einspannringabschnitt des als Ventilsitz dienenden Lippendichtringes im einfachsten Fall in eine entsprechend dimensionierte und konfigurierte Ringnut eingedrückt werden, vorzugsweise mit zusätzlichen Dicht- und/oder Rastprofilen am Ring und/oder Gehäuse, die am eingangsseitigen Teil des Ventilgehäuses um jeden Eingangsanschluß herum ausgeformt ist. Insbesondere dann, wenn dieser zylindrische Einspannringabschnitt des Lippendichtringes mit radialen verstärkenden Ringabschnitten versehen ist, reicht die dadurch erzielte Dichtung vollständig aus, um eine hermetische Abdichtung zwischen der oder den einzelnen Eingangskammern des Ventils zu erzielen. Zur Betätigung des Ferschlußteils, sei dieses nun als Scheibe, sei es als Zylinder ausgebildet, ist in der Drehachse des Schiebers, die zentral oder auch exzentrisch angeordnet sein kann, ein Wellenzapfen aus dem Ventilgehäuse herausgeführt, an dem ein Bowdenzughebel, ein pneumatischer Stellantrieb oder ein elektromotorischer Stellantrieb in an sich bekannter Weise angreifen können. Dabei ist es vom Konstruktionsaufwand selbstverständlich wünschenswert, durch möglichst geringe Reibungsverluste im Ventil, die erforderlichen Stellkräfte so klein wie möglich zu halten. Zu diesem Zweck ist vorzugsweise bei Verwendung scheibenförmiger Drehschieber auf der Ausgangsseite der Schieberplatte eine Anlaufscheibe mit relativ kleiner Kontaktfläche zur Unterstützung und Führung der Verschlußteilscheibe beigelegt. Diese Anlaufscheibe kann selbstverständlich auch einstückig in dem ausgangsseitigen Ventilgehäuseteil ausgebildet sein.

Die Erfindung ist im folgenden anhand eines Ausführungsbeispiels in Verbindung mit den Zeichnungen näher erläutert. Es zeigen:
- Fig. 1: im Axialschnitt ein Mischventil, bei dem die Merkmale der Erfindung verwirklicht sind; und
- Fig. 2: in teilperspektivischer Darstellung einen variierten Schnurquerschnitt eines Ventilsitzlippendichtringes der in Fig. 1 dargestellten Art.

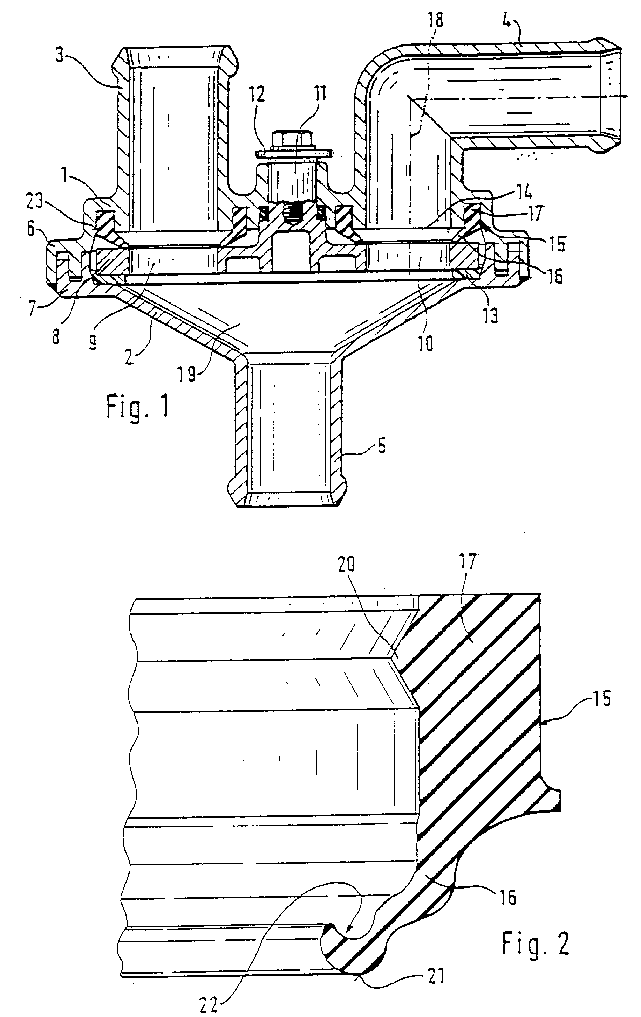

Das in der Fig. 1 dargestellte Drehschieber-Mischventil besteht aus einem zweiteiligen Ventilgehäuse 1,2, dessen eingangsseitiges Teil 1 zwei Eingangsanschlüsse 3,4 und dessen ausgangsseitiges Teil 2 einen Ausgangsanschluß 5 aufweist. Die beiden Gehäuseteile sind fluiddicht und druckfest miteinander verschweißt, wozu an sich bekannte und zu diesem Zweck gebräuchliche Nut-Feder-Ringprofile 6,7 dienen.

Zwischen den beiden miteinander verschweißten Gehäuseteilen ist eine kreisrunde Drehschieberplatte 8 mit entsprechend profilierten und dimensionierten Durchflußöffnungen 9,10 für jeden der Eingangsanschlüsse 3,4 drehbar gelagert. Über einen Wellenzapfen 11 und einen Betätigungshebel 12, der in der Darstellung der Fig. 1 senkrecht zur Zeichenebene steht, kann die Drehschieberplatte verstellt werden. Die hierzu erforderlichen Stellkräfte werden durch eine Auflaufscheibe 13 aus PTFE vermindert.

An der Mündung 14 jedes der Eingangsanschlüsse 3,4 ist ein als Ventilsitz dienender Dichtring 15 angeordnet, der als Lippendichtring eingangsseitig vor der Drehschieberplatte angeordnet ist. Der Dichtring 15 besteht aus einem Dichtlippenringabschnitt 16 und einem Einspannringabschnitt 17. Der Dichtlippenringabschnitt 16 verjüngt sich gewellt konisch in Durchflußrichtung, d.h. in Richtung von der Mündung 14 des Eingangsanschlusses 4 her in Richtung zur Drehschieberverschlußplatte 8. An den im Durchmesser weiteren, also eingangsseitigen Rand des gewellt konischen Dichtlippenringabschnitts 16 schließt ein stärkerer zylindrischer Einspannringabschnitt 17 an, der zumindest im wesentlichen koaxial zur Längsachse 18 des Eingangsanschlusses 3,4, zumindest koaxial zu dessen Mündungsbereich 14, ist. Das Einspannen des Dichtringes 15 über den Einspannringabschnitt 17 erfolgt durch Eindrücken in eine profilkomplementäre Ringnut 23, die im eingangsseitigen Ventilgehäuseteil 1 vorgesehen ist. Dabei ist der Dichtring 15 so dimensioniert, daß der elastisch verformbare radiale Innenrand des Lippendichtringes unter axialer Vorspannung auf der Oberfläche der Drehschieberplatte aufliegt. Dadurch ist die Dichtheit der Ventilanordnung auch dann gewährt, wenn das beispielsweise über den Eingangsanschluß 4 zugeführte Medium praktisch drucklos zuströmt.

Durch diese Anordnung des Ventilsitzes 15 auf der Eingangsseite der Drehschieberplatte kann auf der dem Ausgangsanschluß 5 zugekehrten Seite der Drehschieberplatte auf jede Art von Dichtung oder Andruckfeder verzichtet werden. Der Sammelraum 19 zum Mischen und Sammeln der separat zuströmenden Medien kann daher überraschend flach und einfach ausgebildet sein.

Ein Ausführungsbeispiel für einen solchen als Ventilsitz dienenden Lippendichtring 15 ist schematisch im vergrößerten Schnurprofilquerschnitt in der Fig. 2 gezeigt. Der dort gezeigte Dichtring 15 besteht aus einem Lippendichtringabschnitt 16 und einem Einspannringabschnitt 17. Der Einspannringabschnitt 17 weist radial vorspringende ringförmige Verstärkungen 20 auf, die eine hermetische Dichtung in der im eingangsseitigen Ventilgehäuseteil ausgebildeten Uförmigen Ringnut 23 (Fig. 1) gewährleistet.

Der Dichtlippenringabschnitt 16 verjüngt sich glockenartig gewellt konisch in Durchflußrichtung nach axial und radial einwärts vorspringend und bildet an seinem radial inneren unteren Rand 21 eine zumindest im wesentlichen U-förmige, entgegen der Strömungsrichtung offene und in sich geschlossen umlaufende Rinne 22, die bei hohen anströmseitigen Innendrücken die als Dichtkraft dienende Anpressung der Dichtlippe 16 auf die Oberfläche der Drehschieberplatte 8 aufbringt. Dabei ist die Unterseite des Dichtlippenringabschnitts 16, also die auf der Drehschieberplatte 8 aufliegende Seite der Dichtlippe 16, vorzugsweise mit einer vorgeprägten PTFE-Folie kaschiert. Auf diese Weise wird nicht nur eine hohe mechanische Festigkeit und Beständigkeit des Ventilsitzes, sondern auch eine spürbare Reduktion des Reibungsmoments zwischen dem Lippendichtring 15 und der Drehschieber-Ventilverschlußscheibe erreicht.

Eine besondere Bedeutung kommt bei dieser Ausgestaltung des Lippendichtringes dem glockenartig gewellten Abschnitt im Bereich der radialen Verjüngung des Ringes zu. Durch eine solche Wellung wird vor allem verhindert, daß der unter Axialdruck eingespannte Ventilsitz-Dichtring bei wechselnden Fluidimpulsen unter Faltenbildung einknickt und dadurch unmittelbar oder durch Materialermüdung vorzeitig undicht wird.

## Patentansprüche

1. Schieberventil mit einem mindestens einen Eingangsanschluß (3;4) aufweisenden eingangsseitigen und einem mindestens einen Ausgangsanschluß (5) aufweisenden ausgangsseitigen Teil eines zweiteiligen Ventilgehäuses (1,2) und mit mindestens einem als Schieber ausgebildeten Verschlußteil (8), das im Gehäuse angeordnet ist und mit mindestens einem eingangsseitig in Durchflußrichtung vor dem Verschlußteil (8) angeordneten Ventilsitz zusammenwirkt, wobei
der Ventilsitz ein aus einem elastischen Werkstoff gebildeter Lippendichtring (15) ist, dadurch **gekennzeichnet,** daß die Dichtlippe des Lippendichtringes (15) radial einwärts gerichtet am Verschlußteil (8) anliegt.

2. Ventil nach Anspruch 1,
**gekennzeichnet** durch
ein als Drehschieberplatte (8) ausgebildetes Verschlussteil.

3. Ventil nach Anspruch 1 mit mehreren Eingangsanschlüssen, einem Ausgangsanschluss und einer Mischkammel hinter dem Verschlussteil,
**gekennzeichnet** durch
einen einzigen, mit zugeordneten Durchflussöffnungen für alle Eingangsanschlüsse des Ventils versehenen scheibenförmigen oder zylindrischen Drehschieber.

4. Ventil nach einem der Ansprüche 1 bis 3,
**gekennzeichnet** durch
einen Ventilsitz-Lippendichtring (15) für jeweils jeden der Eingangsanschlüsse, der sich im vormontierten unverspannten Zustand von der Eingangsanschlußseite her zum Verschlussteil (8) hin zumindest im wesentlichen konisch oder glockenförmig oder mit glockenartig gewelltem Profil trichterartig verjüngt und im betriebsfertigen Einbauzustand axial zwischen dem eingangsseitigen Ventilgehäuseteil und dem Verschlussteil unter Druckverformung eingespannt ist.

5. Ventil nach Anspruch 4,
**gekennzeichnet** durch
einen Ventilsitz-Lippendichtring (15), der einen zur gehäuseinnenseitigen Mündung (14) des Eingangsanschlusses (3;4) koaxialen zylindrischen Einspannringabschnitt (17) aufweist, der als Rastnasen und zu Dichtzwecken radial vorspringende ringförmige Verstärkungen (20) aufweisen kann, und über den der Ventilsitz-Lippendichtring am eingangsseitigen Ventilgehäuseteil gegen dieses dichtend gehaltert ist.

6. Ventil nach einem der Ansprüche oder 5,
**gekennzeichnet** durch
eine um den Innenrand (21) des Ventilsitz-Lippendichtringes (15) in sich geschlossen umlaufende und sich U-förmig oder V-förmig zur Eingangsanschlußseite (4) hin öffnende an den Dichtring (15) angeformte Rinne (22).

7. Ventil nach einem der Ansprüche 1 bis 6,
dadurch **gekennzeichnet**,
dass das Ventilgehäuse und das Verschlussteil aus Kunststoff und der Ventilsitz-Lippendichtring aus einem Elastomer bestehen.

8. Ventil nach einem der Ansprüche 1 bis 7,
dadurch **gekennzeichnet**,
dass der Ventilsitz-Lippendichtring (15) auf seiner dem Verschlussteil (8) zugekehrten Oberfläche mit PTFE beschichtet oder mit einer PTFE-Folie kaschiert ist.

9. Ventil nach einem der Ansprüche 1 bis 8,
**gekennzeichnet** durch
eine in das ausgangsseitige Ventilgehäuseteil (2) eingelegte oder in diesem einstückig ausgeformte Anlaufscheibe (13) zur ausgangsseitigen peripheren Unterstützung einer Drehschieberplatte (8) mit einem aus dem Ventilgehäuse (1) herausgeführtem Betätigungszapfen (11).

10. Verwendung des Ventils nach einem der Ansprüche 1 bis 9 als Regelventil in der Rücklaufleitung des Heizwasserkreises einer Kraftfahrzeugheizung.

## Claims

1. Gate valve comprising a part at the inlet-side with at least one inlet connection (3;4) and a part at the outlet-side with at least one outlet connection (5) of a two-piece valve housing (1;2) and at least one locking part (8) formed as a slide gate, the locking part being arranged in the housing and cooperating with at least one valve seat being arranged at the inlet-side in the flow direction in front of the locking part (8), wherein the valve seat is a lip seal ring (15) formed of an elastic material,
**characterized** in that
the sealing lip of the lip seal ring (15) sits close to the locking part (8) being directed radially inwards.

2. Valve according to claim 1,
**characterized** by
a locking part being formed as a rotary disk valve plate (8).

3. Valve according to claim 1 comprising several inlet connections, an outlet connection and a mixing chamber behind the locking part,
**characterized** by
a single disk-like formed or cylindrical rotary disk valve provided with flow orifices related to all of the valve's inlet connections.

4. Valve according to one of claims 1 to 3,
**characterized** by
a valve seat-lip seat ring (15) for respectively each of the inlet connections, the ring tapering in the pre-assembled and unbraced state from the inlet connection side towards the locking part (8) at least substantially conically or in a bell-formed way or with a bell-like corrugated profile in a funnel-like way and which is embraced axially between the inlet side's valve housing part and the locking part under deformation by compression in the assembled state ready for service.

5. Valve according to claim 4,
**characterized** by
a valve seat-lip seat ring (15) comprising a cylindrical clamping ring section (17) coaxially to the opening at the housing's inner side, the clamping ring section may have radially extending ring-like enforcements (20) as locking noses or for sealing purposes and by which the valve seat-lip seat ring is being haltered sealingly against the inlet side's valve housing part.

6. Valve according to one of claims 4 or 5,
**characterized** by
a groove (22) joined to the sealing ring (15), the groove closely enclosing the inner edge (21) of the valve seat-lip seat ring (15) and opening itself towards the inlet connection side in a U-like or V-like way.

7. Valve according to one of claims 1 to 6,
**characterized** in that
the valve housing and the locking part are constituted of plastics and the valve seat-lip seat ring is constituted of an elastomer.

8. Valve according to one of claims 1 to 7,
**characterized** in that
the valve seat-lip seat ring (15) is covered with polytetrafluoro ethylene or laminated with a polytetrafluoro ethylene on its surface directed to the locking part (8).

9. Valve according to one of claims 1 to 8,
**characterized** by
a stop plate inserted into or being formed as one piece of the outlet side's valve housing part for an outlet-sided peripher support of a rotary disk valve plate (8) with an actuating pin (11) extending from the valve housing (1).

10. Use of the valve according to one of claims 1 to 9 as a regulating valve in the return line of the heating water circuit of a vehicle heating.

## Revendications

1. Soupape à tiroir munie d'une partie d'une boîte à soupape en deux pièces (1, 2), partie située du côté entrée et présentant au moins un raccord d'entrée (3, 4) et d'une partie située du côté sortie et présentant au moins un raccord de sortie (5), et munie d'au moins une pièce de fermeture (8) conçue comme un tiroir, qui est disposée dans la boîte et agit du côté entrée, dans le sens de l'écoulement, avec au moins un siège de soupape disposé devant la pièce de fermeture, le siège de soupape étant un anneau d'étanchéité à lèvres (15) constitué d'une matière élastique, caractérisée en ce que la lèvre d'étanchéité de l'anneau (15) colle radialement à la pièce de fermeture (8) en étant dirigée en dedans.

2. Soupape selon la revendication 1, caractérisée par une pièce de fermeture conçue en tant que plaque à tiroir rotatif.

3. Soupape selon la revendication 1, munie de plusieurs raccords d'entrée, d'un raccord de sortie et d'une chambre de carburation située derrière la pièce de fermeture, caractérisée par un seul tiroir rotatif en forme de disque ou cylindrique, muni d'ouvertures d'écoulement pour tous les raccords d'entrée de la soupape.

4. Soupape selon l'une des revendications 1 à 3, caractérisée par un anneau d'étanchéité à lèvres (15) constituant le siège de soupape et destiné à chacun des raccords d'entrée, anneau qui, à l'état de montage préliminaire et non voilé, s'effile depuis le côté du raccord d'entrée en direction de la pièce de fermeture (8), au moins pour l'essentiel de façon cônique ou en forme de cloche, ou bien en forme d'entonnoir, avec un profil ondulé comme une cloche et qui, à l'état de montage et en ordre de marche, est encastré par déformation sous pression entre la pièce de la boîte de la soupape située du côté entrée et la pièce de fermeture.

5. Soupape selon la revendication 4, caractérisée par un anneau d'étanchéité à lèvres (15) constituant le siège de soupape et qui présente une partie d'anneau de fixation (17) cylindrique et coaxiale par rapport à l'ouverture (14) du raccord d'entrée (3, 4) située sur la face interne de la boîte, partie d'anneau de fixation qui peut présenter des renforcements (20) en forme d'anneau et qui font radialement saillie en tant que nez d'arrêt et à des fins d'étanchéité et au-dessus de laquelle est fixé l'anneau d'étanchéité à lèvres qui constitue le siège de soupape, sur la partie de la boîte à soupape située du côté de l'entrée, en étanchant contre celle-ci.

6. Soupape selon l'une des revendications 4 ou 5, caractérisée par un conduit (22) faisant de façon autonome le tour du bord intérieur (21) de l'anneau d'étanchéité à lèvres (15), s'ouvrant en forme de U ou de V en direction du côté du raccord d'entrée (4) et moulé sur l'anneau d'étanchéité (15).

7. Soupape selon l'une des revendications 1 à 6, caractérisée en ce que la boîte à soupape et la pièce de fermeture sont en matière synthétique et l'anneau d'étanchéité qui constitue le siège de soupape en élastomère.

8. Soupape selon l'une des revendications 1 à 7, caractérisée en ce que l'anneau d'étanchéité (15) qui constitue le siège de soupape est couvert d'une couche de PTFE sur sa surface tournée vers la pièce de fermeture (8) ou doublé d'une feuille de PTFE.

9. Soupape selon l'une des revendications 1 à 8, caractérisée par un disque de démarrage (13) inséré dans la pièce de la boîte à soupape (2) située du côté sortie ou démoulé d'un seul tenant dans celle-ci et destiné à supporter une plaque à tiroir rotatif (8) avec un pivot de commande (11) guidé en dehors de la boîte à soupape (1).

10. Utilisation de la soupape selon l'une des revendications 1 à 9, en tant que soupape de régulation dans la canalisation de retour du circuit d'eau chaude d'un radiateur d'automobile.
